# FASCICULE DE BREVET EUROPEEN

(11) **EP 4 069 958 B1**
(45) Date de publication et mention de la délivrance du brevet: **07.08.2024**
(21) Numéro de dépôt: 20861954.4
(22) Date de dépôt: 12.11.2020
(51) Int. Cl.: F02D 11/10, B60W 20/16, F01N 3/20, F01N 9/00, F02D 41/14

(54) **PROCÉDÉ POUR LIMITER LA QUANTITÉ DE POLLUANTS REJETÉS PAR UN MOTEUR THERMIQUE DE VÉHICULE HYBRIDE**
VERFAHREN ZUR BEGRENZUNG DER MENGE VON SCHADSTOFFEN, DIE VON EINEM HYBRIDFAHRZEUG-THERMISCHEN MOTOR FREIGEGEBEN WERDEN
PROCESS FOR LIMITING THE QUANTITY OF POLLUTANTS RELEASED BY A HYBRID VEHICLE THERMAL ENGINE

(30) Priorité: 03.12.2019 FR 1913659
(43) Date de publication de la demande: 12.10.2022
(73) Titulaire: Stellantis Auto SAS, 78300 Poissy (FR)
(72) Inventeur: BASTIANI, Philippe, 78300 POISSY (FR); FREIRE SUAREZ, Violette, 78150 LE CHESNAY (FR); BARDET, Arnaud, 78150 LE CHESNAY (FR); MILHAU, Yohan, 78630 ORGEVAL (FR); ROCQ, Gaetan, 78125 LA BOISSIERE ECOLE (FR); HABBANI, Ridouane, 92600 ASNIERES SUR SEINE (FR)
(86) Numéro de dépôt international: PCT/FR2020/052062
(87) Numéro de publication internationale: WO 2021/111049

(56) Documents cités:
- EP-A1- 1 428 712
- EP-A1- 3 251 881
- EP-B1- 3 251 881
- DE-A1- 102016 201 232
- FR-A1- 3 080 153
- US-B1- 10 166 988

## Description

L'invention se rapporte à un procédé destiné à être mis en oeuvre par un véhicule hybride comprenant un moteur thermique et un moteur électrique. Le procédé permet de réduire la production de particules polluantes, notamment de particules fines.

Il est connu de l'état de la technique que certains véhicules hybrides comportent un moteur thermique pouvant être du type essence ou diesel, associé à une deuxième motorisation utilisant une source d'énergie auxiliaire, pouvant être électrique, fonctionnant sans émission de gaz polluants. De tels véhicules se rechargent en électricité, notamment, lors du roulage afin de réduire les consommations d'énergie et les émissions de gaz polluants.

Traditionnellement, la structure de motorisation d'un véhicule hybride comprend, au moins, un moteur thermique, un moteur électrique, un embrayage et une boîte de vitesses reliée aux roues, cet ensemble étant relié au moyen d'un arbre primaire. Optionnellement, un moteur électrique de démarrage complète la structure de motorisation du véhicule hybride afin de démarrer le moteur thermique.

Certains véhicules hybrides sont rechargeables en électricité et fonctionnent selon divers modes. Par exemple, on connaît un premier mode associant les deux motorisations, un second mode utilisant uniquement le moteur thermique ou un troisième mode utilisant uniquement le moteur électrique. Pour ce dernier mode, le moteur thermique est alors complètement arrêté. A la demande du conducteur, il est parfois nécessaire de démarrer le moteur thermique, notamment quand la batterie n'est plus suffisamment chargée. Pour atteindre l'accélération de régime demandée par le conducteur, différentes phases se succèdent. Lorsque le démarrage du moteur thermique est amorcé, l'embrayage est ouvert et le moteur thermique est démarré. Puis, dans une phase devant être la plus rapide possible, le système de transmission de puissance et de pilotage du véhicule hybride pilote le moteur thermique afin d'accélérer son régime, également dénommé vitesse de rotation, et ainsi lui permettre finalement d'égaliser le régime de l'arbre primaire. En fin de démarrage du moteur thermique, l'embrayage est fermé. Le régime du moteur thermique est alors le même que celui de l'arbre primaire. C'est lors de la phase de montée en régime du moteur thermique et lors de la fermeture de l'embrayage que les émissions de polluants sont les plus élevées. Dans le cas de démarrage du moteur thermique, il est fréquent que sa température soit proche, voire identique, à la température extérieure au véhicule hybride. Ainsi, les émissions de polluants, et plus particulièrement les émissions de particules fines, sont augmentées.

Les émissions de polluants comportent, notamment, des particules fines, des hydrocarbures imbrûlés, du monoxyde d'azote, ou encore des oxydes d'azote. Ces émissions de polluants sont traitées par des systèmes de post traitement tels que les catalyseurs agissant comme des filtres. Ces catalyseurs traitent la production des émissions de polluants, notamment lors du démarrage du moteur thermique. Ils sont une première solution afin d'éviter le rejet d'une partie de ces particules polluantes dans l'atmosphère.

Le document FR 2 994 920 divulgue une solution alternative aux catalyseurs afin de réduire ces émissions de polluants. Il s'agit d'un procédé d'optimisation du roulage électrique et d'amorçage du système de dépollution d'un moteur thermique, pour véhicule hybride, comprenant une deuxième motorisation alimentée par une réserve d'énergie auxiliaire renouvelable et un moteur thermique de traction comportant au moins un système de dépollution des gaz d'échappement nécessitant une mise en température pour amorcer son fonctionnement. Ce véhicule met en oeuvre une stratégie de traction donnant un premier seuil nominal de traction optimisé en énergie, maintenant une traction grâce à la deuxième motorisation si le conducteur demande une puissance inférieure à ce seuil afin d'optimiser la consommation d'énergie. Le procédé établit une stratégie de dépollution donnant un deuxième seuil d'amorçage du système de dépollution, défini par rapport à ce premier seuil nominal de traction et au niveau d'énergie restant dans la réserve d'énergie auxiliaire, favorisant le roulage avec cette énergie en ne demandant pas de démarrage du moteur thermique pour le besoin d'amorçage, si la stratégie de traction ne le demande pas, ou si la demande de puissance du conducteur est inférieure à ce deuxième seuil d'amorçage, permettant d'anticiper les besoins de démarrage du moteur thermique, et d'ajuster un seuil d'amorçage du système de dépollution. Ce procédé permet d'avoir un meilleur filtrage des polluants. Un autre exemple de procédé pour améliorer l'épuration des polluants est présenté dans le document EP1428712 A1.

L'inconvénient principal de ces solutions est qu'on ne réduit pas à la source la production des polluants. En effet, ces solutions consistent en un traitement des émissions de polluants effectué par des systèmes de dépollution classiques. Ces systèmes de dépollution présentent en outre une masse embarquée supplémentaire. De surcroît, ils sont complexes à mettre en oeuvre.

Le but de l'invention est donc de pallier les inconvénients de l'art antérieur en proposant un procédé améliorant la phase de démarrage du moteur thermique afin d'obtenir un compromis entre le régime du moteur thermique souhaité et une quantité limitée de polluants rejetés.

Pour ce faire, l'invention a notamment pour objet un procédé pour limiter la production de polluants, notamment de particules fines, d'un moteur thermique de véhicule hybride, lors de la phase de démarrage dudit moteur thermique, ledit véhicule hybride comportant une structure de motorisation comprenant ledit moteur thermique, un moteur électrique, un arbre primaire et un embrayage disposé entre ledit moteur thermique et ledit moteur électrique, ledit moteur thermique présentant un couple maximal de fonctionnement, ledit procédé mettant en oeuvre un ordinateur et comprenant les étapes suivantes :
- une étape a) d'obtention de la quantité maximale de polluants à rejeter ;
- une étape b) d'obtention d'une courbe de fonctionnement dudit moteur thermique indiquant la quantité de polluants rejetés en fonction du couple généré par ledit moteur thermique ;
- une étape c) de détermination d'un couple maximal à générer par ledit moteur thermique pour la quantité de polluants à rejeter à partir de ladite courbe de fonctionnement ;
- une étape d) de calcul d'un régime cible du moteur thermique à partir dudit couple maximal ;
- une étape e) de mesure du régime de l'arbre primaire ;
- une étape f) de calcul d'un couple intermédiaire ;
- une étape g) de calcul d'une accélération du régime réel dudit moteur thermique ;
- une étape h) de détermination d'une consigne de régime du moteur thermique à partir de ladite accélération ;
- une étape i) de régulation du régime réel du moteur thermique suivant la consigne de régime jusqu'à atteindre ledit régime cible ;
- une étape j) de régulation du régime réel dudit moteur thermique jusqu'à égaliser ledit régime réel avec ledit régime de l'arbre primaire ;

De préférence, ledit moteur thermique comporte en outre une machine électrique de démarrage.

De manière préférée, ledit moteur thermique est du type essence ou diesel. Avantageusement, le couple maximal de fonctionnement est inférieur ou égal à 300 N.m.

De préférence, ledit procédé comporte en outre une étape d'obtention d'une pondération (POND) de couple, ledit couple intermédiaire CI étant égal à CMF x POND + (1-POND) x minimum (CM, CMF), CMF étant ledit couple maximal de fonctionnement, POND étant ladite pondération de couple, CM étant le couple maximal et minimum (CM, CMF) étant le minimum entre le couple maximal et le couple maximal de fonctionnement.

De préférence, ladite structure de motorisation présente une inertie, ladite accélération étant égale à (1 /INE) x min (CI, CM), INE étant l'inertie de ladite structure de motorisation (INE), CI étant ledit couple intermédiaire, CM étant le dit couple maximal et min (CI, CM) étant le minimum entre ledit couple intermédiaire et ledit couple maximal.

De préférence, ledit procédé comporte en outre une étape k) de fermeture de l'embrayage.

De préférence, le régime de l'arbre primaire est inférieur ou égal à 3000 tours par minute.

De préférence, ledit régime cible est inférieur ou égal à 3500 tours par minute. L'invention concerne également un système de traitement de données comprenant un processeur configuré pour mettre en oeuvre les étapes a) à k) du procédé.

L'invention se rapporte en outre à un produit de type programme d'ordinateur, comprenant au moins une séquence d'instructions stockée et lisible par un processeur et qui, une fois lue par ce processeur, provoque la réalisation des étapes a) à k) du procédé.

L'invention concerne aussi un support lisible par un ordinateur comportant le produit de type programme d'ordinateur.

On décrira ci-après, à titre d'exemples non limitatifs, des formes d'exécution de la présente invention, en référence aux figures annexées sur lesquels :
[Fig.1] illustre la structure de motorisation d'un véhicule hybride dans lequel le procédé selon l'invention est mis en oeuvre ;
[Fig.2] est un graphique représentant les régimes du moteur thermique et du moteur électrique en fonction du temps ;
[Fig.3] est un graphique représentant l'évolution du couple du moteur thermique ainsi que la position de la pédale d'accélérateur en fonction du temps.

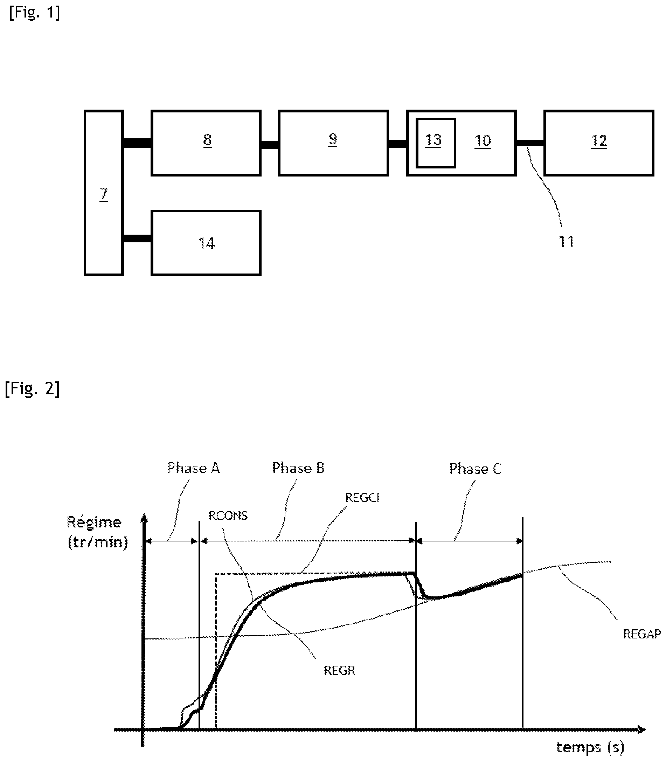

En référence à la figure 1, il est représenté schématiquement une structure de motorisation d'un véhicule hybride. Cette structure de motorisation comprend un moteur thermique 8, un moteur électrique 13, un embrayage 9, une boîte de vitesses 10, des roues 12, le tout relié au moyen d'un arbre primaire 11. Cette structure de motorisation est complétée par un moteur électrique de démarrage 14 permettant de démarrer ledit moteur thermique 8. Le moteur thermique 8 est démarré, lorsque cela est nécessaire, par l'intermédiaire d'un système de transmission de puissance et de pilotage 7 relié au moteur électrique de démarrage 14.

En référence maintenant à la figure 2, il est représenté, en fonction du temps, le régime de l'arbre primaire REGAP en tours par minute, le régime cible REGCI du moteur thermique 8, le régime réel REGR du moteur thermique 8 et la consigne de régime RCONS du moteur thermique 8. Le régime cible REGCI dudit moteur thermique 8 est supérieur ou égal au régime de l'arbre primaire REGAP durant la phase de démarrage du moteur thermique 8. Le régime cible REGCI est déterminé par une consigne provenant du conducteur, par exemple au moyen d'un actionneur tel qu'une pédale d'accélérateur. Cette consigne se traduit par le démarrage dudit moteur thermique 8. Les phases successives du démarrage dudit moteur thermique 8 sont représentées sur la figure 2 avec tout d'abord une phase A correspondant à la phase de démarrage du moteur thermique 8. La phase B représente l'accélération du régime réel REGR du moteur thermique 8. Durant la phase B, la pente de la courbe de régime réel REGR dudit moteur thermique 8 est plus importante que pendant les autres phases. Enfin, la phase C représente l'égalisation du régime réel REGR dudit moteur thermique 8 et du régime de l'arbre primaire REGAP afin de fermer finalement l'embrayage 9. Le régime réel REGR dudit moteur thermique 8 se superpose alors avec le régime de l'arbre primaire REGAP.

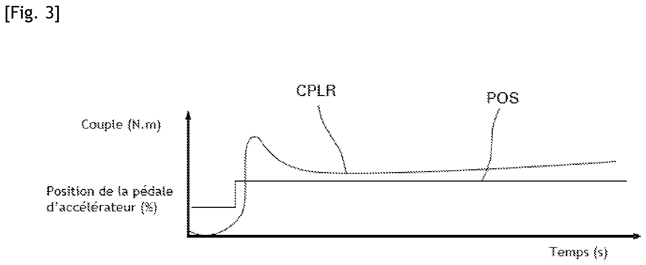

En référence dorénavant à la figure 3, il est représenté, en fonction du temps, la position POS de la pédale d'accélérateur dudit véhicule hybride et le couple réel CPLR généré par le moteur thermique 8. Lorsque le conducteur appuie sur la pédale d'accélérateur, le système de transmission de puissance et de pilotage 7 du moteur traduit la position POS de la pédale d'accélérateur, par un couple réel CPLR à transmettre audit moteur thermique 8. Ce couple réel CPLR induit un régime réel REGR dudit moteur thermique 8. Le régime réel REGR dudit moteur thermique 8 diffère légèrement de la consigne de régime RCONS.

L'avantage de l'invention est de limiter la quantité de polluants rejetés dans l'environnement extérieur au véhicule, en ajustant l'accélération du régime réel REGR du moteur thermique 8. En outre, il est défini un couple maximal CM à ne pas dépasser pour limiter la quantité de polluants rejetés. Typiquement, pour un moteur thermique dont le couple maximal de fonctionnement CMF est de 300 N.m, le couple maximal CM pour limiter la quantité de polluants est compris entre 70 et 90 N.m.

Le procédé selon l'invention exploite la courbe de fonctionnement CFONC dudit moteur thermique 8, dénommée également cartographie moteur, indiquant la quantité de polluants rejetés en fonction du couple réel CPLR généré par ledit moteur thermique 8. Cette courbe de fonctionnement CFONC est généralement obtenue au moyen d'essais sur ledit moteur thermique 8 dans différentes configurations de fonctionnement.

Ensuite, le couple maximal CM à générer par le moteur thermique 8 pour une quantité maximale de polluants à rejeter QTEM est déterminé par la lecture de ladite courbe de fonctionnement CFONC. Une pondération de couple POND est appliquée dans le procédé selon l'invention. La pondération de couple POND permet de réduire la vitesse de montée en régime dudit moteur thermique 8 et donc d'agir sur la pente de la courbe de son régime. Par exemple, la pondération de couple POND est égale à 0,8.

Une étape de mesure du régime de l'arbre primaire REGAP est ensuite mise en oeuvre. Le régime cible REGCI du moteur thermique 8 est fixé supérieur ou égal au régime de l'arbre primaire REGAP. Le régime cible REGCI dudit moteur thermique 8 est déterminé au moyen de la position de la pédale d'accélérateur POS.

On obtient ensuite le couple maximal de fonctionnement CMF du moteur thermique 8 et l'inertie de la structure de motorisation INE du véhicule hybride. On calcule ensuite un couple intermédiaire CI, ledit couple intermédiaire étant égal à CMF x POND + (1-POND) x minimum (CM, CMF), CMF étant ledit couple maximal de fonctionnement (CMF), POND étant ladite pondération de couple (POND), CM étant le couple maximal (CM) et minimum (CM, CMF) étant le minimum entre le couple maximal (CM) et le couple maximal de fonctionnement (CMF).

L'accélération ACC de régime réel REGR est ensuite calculée, ladite accélération (ACC) étant égale à (1/INE) x min (CI, CM), INE étant l'inertie de la structure de motorisation (INE), CI étant ledit couple intermédiaire, CM étant le dit couple maximal (CM) et min (CI, CM) étant le minimum entre ledit couple intermédiaire (CI) et ledit couple maximal (CM). L'accélération de régime réel REGR du moteur thermique 8 est contrôlée et par conséquent les émissions de polluants sont limitées. Traditionnellement, on cherche à atteindre le régime maximal le plus rapidement possible à partir du l'instant où l'on démarre le moteur thermique 8. Par exemple, si l'on souhaite atteindre un régime maximal de 3000 tours par minute, le temps nécessaire est compris entre 600 et 800 millisecondes. Le procédé selon l'invention permet de contrôler, notamment, la phase débutant au moment du démarrage du moteur thermique et l'atteinte du régime maximal. Par exemple, dans un mode de réalisation particulier de l'invention, un régime maximal de 3000 tours par minute est atteint en 900 millisecondes.

Lors du démarrage du moteur thermique 8, le conducteur demande une augmentation de régime réel REGR audit véhicule, au moyen de la pédale d'accélérateur. Le système de transmission de puissance et de pilotage 7 détermine ainsi un régime cible REGCI à atteindre en fonction de la demande du conducteur. Dans un mode de réalisation particulier de l'invention, ledit régime cible REGCI est de 3000 tours par minute. Dans un autre mode de réalisation particulier de l'invention, la détermination du régime cible REGCI est réalisée simultanément avec l'étape de calcul du couple maximal CM pour une quantité maximale de polluants (QTEM) à rejeter. Il est ensuite déterminé la consigne de couple moteur CONSMT que le système de transmission de puissance et de pilotage 7 envoie au moteur thermique 8. La consigne de couple moteur CONSMT est déterminée grâce au régime cible REGCI à atteindre et à l'accélération ACC du régime du moteur thermique calculée. Finalement, lors d'une phase C, le régime réel REGR du moteur thermique 8 est ensuite régulé afin d'égaliser, ou quasiment égaliser, le régime de l'arbre primaire REGAP.

La présente invention peut s'appliquer aux véhicules hybrides comportant un moteur thermique de type essence ou diesel. Dans un mode de réalisation, le procédé selon l'invention met en oeuvre un ordinateur, tel qu'un calculateur. La présente invention peut être mise en oeuvre au moyen d'un système de traitement de données comprenant un processeur configuré pour mettre en oeuvre toutes les étapes du procédé. En outre un produit de type programme d'ordinateur comprenant au moins une séquence d'instructions stockée et lisible par un processeur et qui, une fois lue par ce processeur, provoque la réalisation des étapes du procédé. Un support lisible par un ordinateur comporte ledit produit de type programme d'ordinateur.

En outre, la présente invention permet de limiter, en particulier, les émissions de particules de moins de 20 nanomètres.

## Revendications

1. Procédé pour limiter la production de polluants, notamment de particules fines, d'un moteur thermique (8) de véhicule hybride, lors de la phase de démarrage dudit moteur thermique (8), ledit véhicule hybride comportant une structure de motorisation comprenant ledit moteur thermique (8), un moteur électrique (13), un arbre primaire (11) et un embrayage (9) disposé entre ledit moteur thermique (8) et ledit moteur électrique (13), ledit moteur thermique (8) présentant un couple maximal de fonctionnement (CMF), ledit procédé mettant en oeuvre un ordinateur et comprenant les étapes suivantes :
- une étape a) d'obtention de la quantité maximale de polluants (QTEM) à rejeter ;
- une étape b) d'obtention d'une courbe de fonctionnement (CFONC) dudit moteur thermique (8) indiquant la quantité de polluants rejetés en fonction du couple généré par ledit moteur thermique (8) ;
- une étape c) de détermination d'un couple maximal (CM) à générer par ledit moteur thermique (8) pour la quantité de polluants à rejeter (QTEM) à partir de ladite courbe de fonctionnement (CFONC) ;
- une étape d) de calcul d'un régime cible (REGCI) du moteur thermique (8) à partir dudit couple maximal (CM) ;
- une étape e) de mesure du régime de l'arbre primaire (REGAP) ;
- une étape f) de calcul d'un couple intermédiaire (CI) ;
- une étape g) de calcul d'une accélération (ACC) du régime réel (REGR) dudit moteur thermique (8) ;
- une étape h) de détermination d'une consigne de régime (RCONS) du moteur thermique (8) à partir de ladite accélération (ACC) ;
- une étape i) de régulation du régime réel (REGR) du moteur thermique (8) suivant la consigne de régime (RCONS) jusqu'à atteindre ledit régime cible (REGCI) ;
- une étape j) de régulation du régime réel (REGR) dudit moteur thermique (8) jusqu'à égaliser ledit régime réel (REGR) avec ledit régime de l'arbre primaire (REGAP).

2. Procédé selon la revendication 1 **caractérisé en ce que** ledit procédé comporte en outre une étape d'obtention d'une pondération (POND) de couple, ledit couple intermédiaire (CI) étant égal à CMF x POND + (1-POND) x minimum (CM, CMF), CMF étant ledit couple maximal de fonctionnement (CMF), POND étant ladite pondération de couple (POND), CM étant le couple maximal (CM) et minimum (CM, CMF) étant le minimum entre le couple maximal (CM) et le couple maximal de fonctionnement.

3. Procédé selon l'une quelconque des revendications précédentes **caractérisé en ce que** ladite structure de motorisation présente une inertie (INE), ladite accélération (ACC) étant égale à (1 /INE) x min (CI, CM), INE étant l'inertie de ladite structure de motorisation (INE), CI étant ledit couple intermédiaire, CM étant le dit couple maximal (CM) et min (CI, CM) étant le minimum entre ledit couple intermédiaire (CI) et ledit couple maximal (CM

4. Procédé selon l'une quelconque des revendications précédentes **caractérisé en ce que** ledit procédé comporte en outre une étape k) de fermeture de l'embrayage (9).

5. Procédé selon l'une quelconque des revendications précédentes **caractérisé en ce que** ledit moteur thermique (8) est du type essence ou diesel.

6. Procédé selon l'une quelconque des revendications précédentes **caractérisé en ce que** la pondération de couple (POND) est égale à 0,8.

7. Procédé selon l'une quelconque des revendications précédentes **caractérisé en ce que** ledit régime cible (REGCI) est inférieur ou égal à 3500 tours par minute.

8. Système de traitement de données comprenant un processeur configuré pour mettre en oeuvre les étapes a) à k) du procédé selon l'une quelconque des revendications 1 à 7.

9. Produit de type programme d'ordinateur, comprenant au moins une séquence d'instructions stockée et lisible par un processeur et qui, une fois lue par ce processeur, provoque la réalisation des étapes a) à k) du procédé selon l'une quelconque des revendications 1 à 7.

10. Support lisible par un ordinateur comportant le produit de type programme d'ordinateur selon la revendication 9.

## Patentansprüche

1. Verfahren zur Begrenzung der Produktion von Schadstoffen, insbesondere Feinpartikeln, eines Wärmemotors (8) eines Hybridfahrzeugs während der Startphase des Wärmemotors (8), wobei das Hybridfahrzeug eine Motorstruktur umfasst, die den Wärmemotor (8) umfasst ), einem Elektromotor (13), einer Primärwelle (11) und einer Kupplung (9), die zwischen der Wärmekraftmaschine (8) und dem Elektromotor (13) angeordnet sind, wobei die Wärmekraftmaschine (8) ein maximales Betriebsdrehmoment aufweist ( CMF), wobei das Verfahren einen Computer verwendet und die folgenden Schritte umfasst:
- einen Schritt a) zur Ermittlung der maximalen Schadstoffmenge (QTEM), die zurückgewiesen werden soll;
- einen Schritt b) zum Erhalten einer Betriebskurve (CFONC) der Wärmekraftmaschine (8), die die Menge der freigesetzten Schadstoffe als Funktion des von der Wärmekraftmaschine (8) erzeugten Drehmoments angibt;
- einen Schritt c) zur Bestimmung eines maximalen Drehmoments (CM), das von der Wärmekraftmaschine (8) für die auszuscheidende Schadstoffmenge (QTEM) aus der Betriebskurve (CFONC) erzeugt werden soll;
- einen Schritt d) zum Berechnen einer Zieldrehzahl (REGCI) der Wärmekraftmaschine (8) aus dem maximalen Drehmoment (CM);
- einen Schritt e) des Messens der Drehzahl der Primärwelle (REGAP);
- einen Schritt f) der Berechnung eines Zwischendrehmoments (CI);
- einen Schritt g) der Berechnung einer Beschleunigung (ACC) der tatsächlichen Drehzahl (REGR) der Wärmekraftmaschine (8);
- einen Schritt h) des Bestimmens eines Drehzahlsollwerts (RCONS) der Wärmekraftmaschine (8) aus der Beschleunigung (ACC);
- einen Schritt i) der Regelung der tatsächlichen Drehzahl (REGR) der Wärmekraftmaschine (8) entsprechend dem Drehzahlsollwert (RCONS) bis zum Erreichen der Zieldrehzahl (REGCI);
- einen Schritt j) zum Regulieren der tatsächlichen Drehzahl (REGR) des Wärmemotors (8), bis die tatsächliche Drehzahl (REGR) mit der Drehzahl der Primärwelle (REGAP) gleichgesetzt ist.

2. Verfahren nach Anspruch 1, **dadurch gekennzeichnet, dass** das Verfahren außerdem einen Schritt zum Erhalten einer Gewichtung (POND) des Drehmoments umfasst, wobei das Zwischendrehmoment (CI) gleich CMF × POND + (1-POND) x Minimum (CM, CMF) ist. CMF ist das maximale Betriebsdrehmoment (CMF), POND ist die Drehmomentgewichtung (POND), CM ist das maximale Drehmoment (CM) und Minimum (CM, CMF) ist das Minimum zwischen dem maximalen Drehmoment (CM) und dem maximalen Betriebsdrehmoment.

3. Verfahren nach einem der vorhergehenden Ansprüche, **dadurch gekennzeichnet, dass** die Motorisierungsstruktur eine Trägheit (INE) aufweist, wobei die Beschleunigung (ACC) gleich (1 /INE) x min (CI, CM) ist, wobei INE die Trägheit der Motorisierung ist Struktur (INE), wobei CI das mittlere Drehmoment ist, CM das maximale Drehmoment (CM) ist und min (CI, CM) das Minimum zwischen dem mittleren Drehmoment (CI) und dem maximalen Drehmoment (CM) ist

4. Verfahren nach einem der vorhergehenden Ansprüche, **dadurch gekennzeichnet, dass** das Verfahren außerdem einen Schritt k) des Schließens der Kupplung (9) umfasst.

5. Verfahren nach einem der vorhergehenden Ansprüche, **dadurch gekennzeichnet, dass** der Wärmemotor (8) vom Benzin- oder Dieseltyp ist.

6. Verfahren nach einem der vorhergehenden Ansprüche, **dadurch gekennzeichnet, dass** die Drehmomentgewichtung (POND) gleich 0,8 ist.

7. Verfahren nach einem der vorhergehenden Ansprüche, **dadurch gekennzeichnet, dass** die Zielgeschwindigkeit (REGCI) kleiner oder gleich 3500 Umdrehungen pro Minute ist.

8. Datenverarbeitungssystem, das einen Prozessor umfasst, der dazu konfiguriert ist, die Schritte a) bis k) des Verfahrens nach einem der Ansprüche 1 bis 7 durchzuführen.

9. Produkt vom Typ Computerprogramm, das mindestens eine Folge von Anweisungen umfasst, die von einem Prozessor gespeichert und lesbar sind und die, sobald sie von diesem Prozessor gelesen werden, die Ausführung der Schritte a) bis k) des Verfahrens nach einem der Ansprüche 1 bis 10 bewirkt 7.

10. Computerlesbares Medium, das das Computerprogrammprodukt nach Anspruch 9 umfasst.

## Claims

1. Method for limiting the production of pollutants, in particular fine particles, of a thermal engine (8) of a hybrid vehicle, during the starting phase of said thermal engine (8), said hybrid vehicle comprising an engine structure comprising said thermal engine (8), an electric motor (13), a primary shaft (11) and a clutch (9) arranged between said heat engine (8) and said electric motor (13), said heat engine (8) having a maximum torque of operation (CMF), said method using a computer and comprising the following steps:
- a step a) of obtaining the maximum quantity of pollutants (QTEM) to reject;
- a step b) of obtaining an operating curve (CFONC) of said heat engine (8) indicating the quantity of pollutants released as a function of the torque generated by said heat engine (8);
- a step c) of determining a maximum torque (CM) to be generated by said heat engine (8) for the quantity of pollutants to be rejected (QTEM) from said operating curve (CFONC);
- a step d) of calculating a target speed (REGCI) of the heat engine (8) from said maximum torque (CM);
- a step e) of measuring the speed of the primary shaft (REGAP);
- a step f) of calculating an intermediate torque (CI);
- a step g) of calculating an acceleration (ACC) of the actual speed (REGR) of said heat engine (8);
- a step h) of determining a speed setpoint (RCONS) of the heat engine (8) from said acceleration (ACC);
- a step i) of regulating the actual speed (REGR) of the heat engine (8) following the speed setpoint (RCONS) until reaching said target speed (REGCI);
- a step j) of regulating the real speed (REGR) of said thermal engine (8) until equalizing said real speed (REGR) with said speed of the primary shaft (REGAP).

2. Method according to claim 1 **characterized in that** said method further comprises a step of obtaining a weighting (POND) of torque, said intermediate torque (CI) being equal to CMF x POND + (1-POND) x minimum ( CM, CMF), CMF being said maximum operating torque (CMF), POND being said torque weighting (POND), CM being the maximum torque (CM) and minimum (CM, CMF) being the minimum between the maximum torque (CM ) and the maximum operating torque.

3. Method according to any one of the preceding claims **characterized in that** said motorization structure has an inertia (INE), said acceleration (ACC) being equal to (1 /INE) x min (CI, CM), INE being the inertia of said motorization structure (INE), CI being said intermediate torque, CM being said maximum torque (CM) and min (CI, CM) being the minimum between said intermediate torque (CI) and said maximum torque (CM

4. Method according to any one of the preceding claims, **characterized in that** said method further comprises a step k) of closing the clutch (9).

5. Method according to any one of the preceding claims, **characterized in that** said thermal engine (8) is of the gasoline or diesel type.

6. Method according to any one of the preceding claims, **characterized in that** the torque weighting (POND) is equal to 0.8.

7. Method according to any one of the preceding claims, **characterized in that** said target speed (REGCI) is less than or equal to 3500 revolutions per minute.

8. Data processing system comprising a processor configured to implement steps a) to k) of the method according to any one of claims 1 to 7.

9. Computer program type product, comprising at least one sequence of instructions stored and readable by a processor and which, once read by this processor, causes steps a) to k) of the method to be carried out according to any one of the claims 1 to 7.

10. A computer-readable medium comprising the computer program product of claim 9.
